(19) **Europäisches Patentamt**
**European Patent Office**
**Office européen des brevets**

(11) **EP 2 127 435 B1**

(12) **EUROPEAN PATENT SPECIFICATION**

(45) Date of publication and mention
of the grant of the patent:
**05.04.2017 Bulletin 2017/14**

(51) Int Cl.:
**H04W 16/00** (2009.01)     **H04L 27/26** (2006.01)

(21) Application number: **07717448.0**

(86) International application number:
**PCT/US2007/061134**

(22) Date of filing: **26.01.2007**

(87) International publication number:
**WO 2008/091348 (31.07.2008 Gazette 2008/31)**

(54) **ALLOCATING CHANNELS FOR REAL-TIME TRAFFIC TRANSMISSION IN A WIRELESS PACKET DATA MULTI-USER ENVIRONMENT**

VERGABE VON KANÄLEN FÜR ECHTZEIT-VERKEHRSÜBERTRAGUNG IN EINER DRAHTLOSEN PAKETDATEN-MEHRBENUTZERUMGEBUNG

ALLOCATION DE CANAUX POUR UNE TRANSMISSION DE TRAFIC EN TEMPS RÉEL DANS UN ENVIRONNEMENT MULTI-UTILISATEURS DE DONNÉES PAR PAQUETS SANS FIL

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**02.12.2009 Bulletin 2009/49**

(73) Proprietor: **Alcatel-Lucent USA Inc.**
**Murray Hill, NJ 07974 (US)**

(72) Inventors:
 • **OBERNOSTERER, Frank**
  **90411 Nuremberg (DE)**
 • **DEKORSY, Armin**
  **90489 Nuremberg (DE)**
 • **GUNREBEN, Peter**
  **91096 Moehrendorf (DE)**

(74) Representative: **Wetzel, Emmanuelle et al**
**Alcatel-Lucent**
**Intellectual Property Business Group**
**70430 Stuttgart (DE)**

(56) References cited:
 **EP-A- 1 517 576**     **EP-A- 1 531 594**
 **US-A1- 2005 031 047**

 • **CHEONG YUI WONG ET AL: "Multiuser OFDM with Adaptive Subcarrier, Bit, and Power Allocation" IEEE JOURNAL ON SELECTED AREAS IN COMMUNICATIONS, IEEE SERVICE CENTER, PISCATAWAY, US, vol. 17, no. 10, October 1999 (1999-10), XP011055027 ISSN: 0733-8716**
 • **YIN H ET AL: "AN EFFICIENT MULTIUSER LOADING ALGORITHM FOR OFDM-BASED BROADBAND WIRELESS SYSTEMS" GLOBECOM'00. 2000 IEEE GLOBAL TELECOMMUNICATIONS CONFERENCE. SAN FRANCISCO, CA, NOV. 27 - DEC. 1, 2000, IEEE GLOBAL TELECOMMUNICATIONS CONFERENCE, NEW YORK, NY : IEEE, US, vol. VOL. 1 OF 3, 27 November 2000 (2000-11-27), pages 103-107, XP001195543 ISBN: 0-7803-6452-X**

EP 2 127 435 B1

**Description**

## 1. FIELD OF THE INVENTION

This invention relates generally to telecommunications, and more particularly, to wireless communications.

## 2. DESCRIPTION OF THE RELATED ART

In a multi-user network environment, many users may desire access to unique services and so a channel allocation technique is used to allocate channels to users for transmitting real-time traffic data. In many wireless communication systems, however, channel allocation may affect system performance. Channel allocation in a wireless network typically determines allocation of a channel to provide each user access to the common access medium with minimal interference to other users. For multiple users, a scheduler may provide access to the wireless network with a desired Quality of Service (QoS) for communications. For example, in a packet data network, a base station controller (BSC) or a radio network controller (RNC) may schedule reverse link (RL) or uplink (UL) communications from the mobile stations to the base stations. Alternatively, a base station may schedule forward link (FL) or downlink (DL) communications. For a data packet transmission on a downlink or a forward link from a base station, a mobile station indicates the supportable data transmission rate. In response, the base station may allocate a radio resource, such as a frequency channel and corresponding bit, and power levels for the user transmission from the mobile station.

Wireless communication systems have evolved to the $3^{rd}$ generation digital multimedia systems (CDMA2000 1X and Universal Mobile Telecommunications System (UMTS)) and to the high-speed data system (CDMA2000 Evolution-Data Optimized (EV-DO) and UMTS High-Speed Downlink Packet Access (HSDPA). While the $3^{rd}$ generation wireless system can support multimedia service with a desired Quality of Service (QoS), the efficiency of the $3^{rd}$ generation wireless system for robust data transmission is not that high since the system is a circuit- switched system. On the other hand, a packet switched high-speed data system uses efficient radio resource allocation and scheduling with radio channel awareness in the transmission. Resource allocation typically includes determining powers and/or bandwidth to optimize performance within the cell served by the base station.

While high-speed packet switched systems, including UMTS-HSDPA, serve mobile communication markets, the long-term evolution (LTE) of UMTS may deliver broadband wireless access to a variety of different service classes. However, resource allocation in providing broadband access with UMTS-LTE may adversely affect overall system performance when serving multiple users each having a desired QoS. Nevertheless, the growth in Internet coupled with a rapid adoption of wireless technology has led to an increasing demand for wireless packet-oriented data transmission. The wireless packet-oriented data traffic on many wireless networks may comprise a mixture of real-time traffic such as voice, multimedia teleconferencing and games, and of non real-time data-traffic such as web browsing, messaging and file transfer. Such traffic characteristics in wireless communication systems may constrain system resources available for transmission when simultaneously providing diverse quality of services (QoSs).

Accordingly, in a multi-user environment, the system resource may include a frequency band, a spreading code, a time slot or even a resource in space domain as well as the power with which a signal is transmitted. Thus, allocation of these resources to the users may be difficult while still being able to meets the QoS constraints given for the specific services, as desired by the different users. For example, in real-time traffic (voice, multimedia streaming etc.) transmitted via a packet-data channel where a fixed-data rate is an essential QoS constraint, an optimum resource allocation may be desired. Such resource allocation may involve allocating frequency bands (channels) to multiple real-time traffic users rather than allocating time, code or space domain units.

As an example, Orthogonal Frequency Division Multiplexing (OFDM) channels may be used for high data rate transmission in the downlink. Utilizing OFDM involves assigning bits, power and different orthogonal frequency channels to multiple users all likely to have access to the total available frequency band. In a multi-user environment, one optimal solution for the joint bit, power and channel allocation aims at fixed-rate transmission with a minimized total transmit power. It results in time-sharing of the channels amongst different users based on a sharing factor, but this joint solution is far too complex for any reasonable implementation.

Another approach divides the joint optimization into two separate optimization problems. One problem deals exclusively with the channel allocation (CA) while bit and power allocation (BPA) is still solved jointly. For the bit and power allocation, a single-user greedy algorithm may be applied in a base station. Several approaches for the channel allocation provide an optimum or close to optimum channel allocation. Although separation of the channel allocation from the bit and power allocation is provided, such optimum channel allocation approaches still result in high complexity and arc therefore not considered suitable for implementations.

Alternatively, several sub-optimum channel allocations allocate channels to users in a stepwise manner where for each step a set of users is created. This approach is commonly called "set-assignment." Users belonging to this set, commonly referred to as an In-Set, compete for the channel allocation while users belonging to a set commonly referred to as an Out-set are not considered for the channel allocation in the respective allocation step. By using such set-assignment, power consumption may be reduced while a channel allocation process still remain less complex if rate requirements are included in the channel allocation process. However, these approaches feature a channel allocation process based upon the best channel, for example, highest channel magnitude. In particular, a channel is selected with the highest magnitude and the respective user out of the competing set of users.

With regard to the channel allocation and the bit, power allocation, if real-time traffic is transmitted via a packet-data scheme (*e.g.*, UMTS-LTE), some shortcomings of the approaches set forth above are as follows:

(1) Joint optimum resource allocation is too complex to be implemented.
(2) Separation of channel allocation from bit and power allocation may simplify the resource allocation, but optimum channel allocation is still too involved for a practical implementation.
(3) Typical sub-optimum channel allocation methods utilize the channel magnitude directly.
While the sets for set-assignment approaches may include rate requirements, primarily the information relied upon in the assignment is limited to the channel magnitude only.
(4) The sub-optimum approach set forth according to item (3) suffer from different shortcomings such as:

a. High transmit power (especially for users located at cell edges)
b. System capacity loss

## SUMMARY OF THE INVENTION

The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

The present invention is directed to overcoming, or at least reducing, the effects of, one or more of the problems set forth above.

The present invention is defined by the subject-matter of the independent Claims. Preferred embodiments are set out in the dependent Claims.

A method is provided for allocating channels in a multi-user environment for transmitting real-time traffic in a wireless packet data network. The method includes determining an *a priori* data rate per channel for each of a plurality of mobile stations based on channel state information associated with a plurality of frequency channels associated with the plurality of mobile stations and a preliminary assumption of a uniform power distribution among the plurality of frequency channels at a transmitter. The method also includes allocating one or several unique frequency channel(s) from said plurality of frequency channels to at least one of the plurality of mobile stations based on said *a priori* data rate per channel for each of the plurality of mobile stations.

A transmitter is provided for implementing embodiments of methods for allocating channels in a multi-user environment for transmitting real-time traffic data in a wireless communication system. Once the frequency channels are ascribed to the mobile stations according to the invention, the bit and power allocation is done in a second step using state-of-art techniques like e.g. employing the greedy algorithm.

EP 1 531 594 A1 discloses an apparatus and a method capable of effectively allocating sub-carriers for a plurality of users and transmitting the sub-carriers to users through multiple antennas in an orthogonal frequency division multiplexing (OFDMA) mobile communication system. US 2005/0031047 A1 discloses an adaptive multicarrier wireless communication system, apparatus and associated methods. EP 1 517 576 A2 discloses a channel allocation method in a BS that communicates on at least two channels in a wireless communication system.

## BRIEF DESCRIPTION OF THE DRAWINGS

The invention may be understood by reference to the following description taken in conjunction with the accompanying drawings, in which like reference numerals identify like elements, and in which:

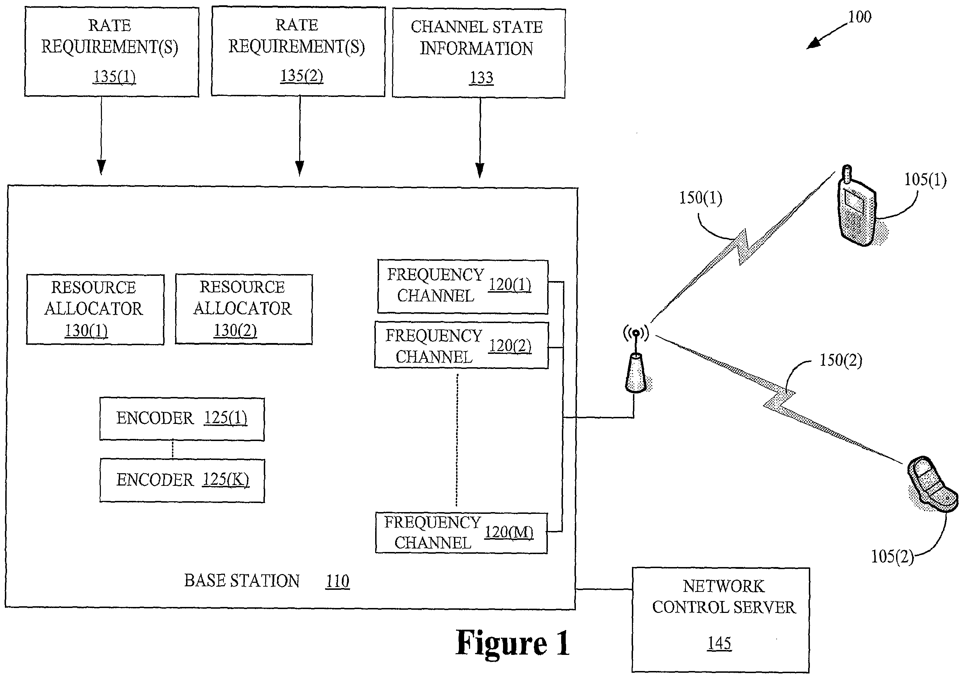

Figure 1 schematically depicts elements of a wireless communication system, such as a UMTS Long Term Evolution (LTE) system which includes first and second mobile stations and a base station including a device for allocating frequency channels for real-time traffic transmission of wireless packet data among multiple users network according to one illustrative embodiment of the present invention;

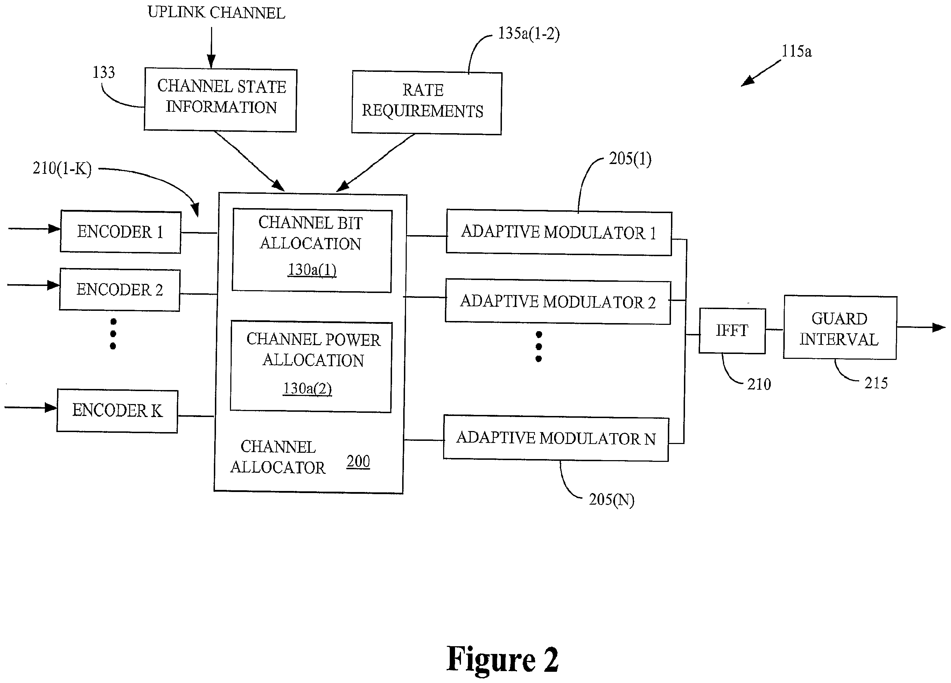

Figure 2 schematically depicts an OFDM transmitter in which first and second resource allocators may provide unique channel, bit and power allocation to the users in a multi-user environment such as the Long Term Evolution (LTE) system shown in Figure 1 in accordance with one illustrative embodiment of the present invention; and

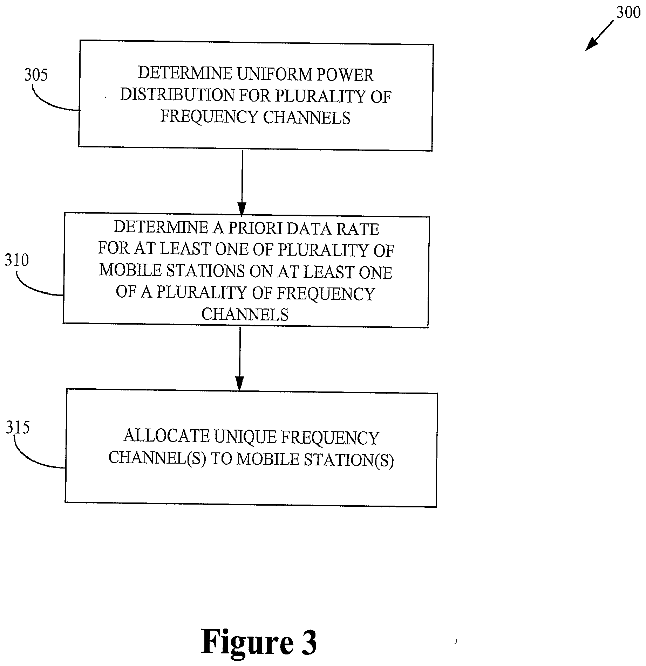

Figure 3 depicts a stylized representation for implementing a method that may allocate channels to a plurality of users for transmitting real-time traffic data based on the *a priori* data rate per frequency channel determined for each individual user of a plurality of users by using user related channel state information and an indication of uniform transmit power distribution among available channels in the wireless communications system shown in Figure 1 consistent with an exemplary embodiment of the present invention.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications and alternatives falling within the scope of the invention as defined by the appended claims.

## DETAILED DESCRIPTION OF SPECIFIC EMBODIMENTS

Illustrative embodiments of the invention are described below. In the interest of clarity, not all features of an actual implementation are described in this specification. It will of course be appreciated that in the development of any such actual embodiment, numerous implementation-specific decisions may be made to achieve the developers' specific goals, such as compliance with system-related and business-related constraints, which will vary from one implementation to another. Moreover, it should be appreciated that such a development effort might be complex and time-consuming, but may nevertheless be a routine undertaking for those of ordinary skill in the art having the benefit of this disclosure.

Generally, a method and an apparatus are provided for allocating channels to a plurality of users for transmitting real-time traffic data in a multi-user environment in a wireless packet data network. By using a transmitter at a base station or a base station router in a wireless communications system, such as a Universal Mobile Telephone System (UMTS) Long Term Evolution (LTE), first and second resource allocators may provide unique channel, bit and power allocation to the users in a multi-user environment. The method comprises determining an *a priori* data rate per channel for each individual user of a mobile station of a plurality of users based on channel state information per user of a plurality of frequency channels based on the preliminary assumption of a uniform power distribution among the channels at a transmitter. The method further comprises allocating one or several unique frequency channel(s) from said plurality of frequency channels to the individual user of said plurality of users based on said *a priori* data rate per channel for each individual user of a plurality of users. The transmitter may comprise a plurality of encoders to independently encode data streams of each individual mobile station user of a plurality of mobile station users. A first resource allocator allocates one or several unique frequency channel(s) from the plurality of frequency channels to the individual user of said plurality of users. Based on the output of this first allocator, i.e. the mapping of frequency channels to users, the second allocator allocates the two remaining resources "bits" and "transmit power" to each individual user of said plurality of users. After this allocation has been done the output of the plurality of encoders is fed into the related adaptive modulators, which is linked to the IFFT device, which is typically used to implement an OFDM transmission system.

Figure 1 schematically depicts a multi-channel wireless communications system, such as a Universal Mobile Telephone System (UMTS) Long Term Evolution (LTE) 100 which includes first and second mobile stations (MSs) 105(1, 2) and a base station (BS) 110 that includes resource allocators 130(1-2) for allocating a plurality of frequency channels 120(1-m) according to one illustrative embodiment of the present invention. The resource allocators 130(1-2) may allocate the channels 120 (1-m) to a plurality of users in a multi-user environment for real-time traffic data transmissions in a relatively high-speed wireless packet data network. A plurality of encoders (ENs) 125 (1-K) operate in conjunction with the resource allocators 130(1-2) to provide an adaptive channel allocation based on channel state information 133, as described in detail herein. In one embodiment, the resource allocators 130(1-2) may also provide bit and power allocation based on channel state information 133 and/or information about individual fixed-rate requirements (REQ) 135(1,2) of one or more active mobile stations 105. The bit and power allocation algorithms may be implemented separately from the channel allocation, e.g. using separate resource allocators 130(1-2).

The base station 110 may service one or more of cells in which the first and second mobile stations 105(1, 2) (also known as Access Terminals (ATs), User Equipment (UE), and the like). The base station 110 may also access a wireless packet data network and other interconnected telecommunications systems, such as a publicly switched telephone system (PSTN) and a Data network. To provide wireless connectivity to the first and second mobile stations 105(1, 2), the base station 110 may communicate with a network control server 145 that connects the cells to the UMTS Long Term Evolution system 100. The UMTS Long Term Evolution system 100 and the network control server 145 may operate according to Universal Mobile Telecommunication Services (UMTS) protocols and may implement Orthogonal Frequency Division Multiple Access (OFDMA). However, persons of ordinary skill in the art having benefit of the present disclosure should appreciate that the present invention is not limited to communication systems that operate according to UMTS-LTE or an OFDMA based communication system. In alternative embodiments, the UMTS Long Term Evolution system 100 may operate according to one or more other protocols including, but not limited to, the Global System for Mobile communication (GSM), Code Division Multiple Access (CDMA, CDMA 2000), and the like.

For illustrative purposes, the multi-channel wireless communications system of Figure 1 is the UMTS Long Term Evolution system 100 employing OFDMA, although it should be understood that the present invention may be applicable to other systems that support data and/or voice communication. The UMTS Long Term Evolution system 100 has some similarities to a conventional UMTS system, but differs substantially with respect to the operation of the instant invention with regard to the base station 110. That is, in the UMTS Long Term Evolution system 100, the transmitter 115 may allocate frequency channel(s) from a plurality of available frequency channels to at least one of the plurality of mobile stations based on said *a priori* data rate per channel for each of the plurality of mobile stations.

In the illustrated embodiment, the transmitter 115 may allocate a plurality of channels 120(1-m) between the first and second mobile stations 105(1,2) within a frequency spectrum over which to communicate with the base station 110. For example, the base station 110 within range of the first mobile station 105(1) may communicate therewith over a communication link 150(1) that includes a downlink and an uplink. In this way, the base stations 110 may provide wireless connectivity to corresponding geographical areas or cells. By using the frequency channel 120(1), the first mobile station 105(1) may receive the real-time traffic data at a high data rate in an downlink of the communication link 150 from the base station to the first mobile station 105(1).

For allocating the frequency channels 120 independently to each scheduled mobile station 105, and in some cases separately from bit and power allocation, the transmitter 115 may comprise a plurality of encoders 125(1-K) and first and second resource allocators 130(1,2). The plurality of encoders 125 (1-K) may independently encode data streams of each individual mobile station 105 user of a plurality of mobile station 105 users. The first resource allocator 130(1) allocates one or several unique frequency channel(s) of a plurality of frequency channels to each mobile station 105 user of the plurality of scheduled mobile station 105 users based on individual channel state information for each user and each Frequency channel and a desired transmission rate, *i.e.,* one or more of the rate requirements 135(1-2). The second resource allocator 130(2) allocates bit and power to the plurality of mobile station 105 users. The resource allocators 130(1-2) link the data streams of the plurality of encoders 125 (1-K) to the determined frequency channels.

As discussed above, the base station 110 may provide wireless connectivity according to UMTS protocols and may implement OFDMA, but the base stations 110 are not limited to these protocols. In the illustrated embodiment, the base station 110 provides wireless connectivity to the first and second mobile stations 105(1,2) using OFDM channels. However, persons of ordinary skill in the art having benefit of the present disclosure should appreciate that the base station 110 may provide wireless connectivity using other channels at any location within or proximate to the cells.

In operation, the base station 110 may provide the wireless connectivity to the first and second mobile stations 105(1,2) according to any desirable protocol, including a Code Division Multiple Access (CDMA, cdma2000) protocol, an Evolved Data Optimized (EVDO, 1XEVDO) protocol, a Universal Mobile Telecommunication System (UMTS) protocol, a Global System for Mobile communications (GSM) protocol, and like. For example, the first rate requirement (REQ) 135(1) of an active user at the first mobile station 105(1,2) may vary from 9.6 kbps to 153.6 kbps. In the illustrated embodiment, real-time traffic data transmissions over the communication links 150(1-2) may include one or more

channels within a selected frequency band, *e.g.*, sub-carriers may be defined according to an OFDMA scheme. Persons of ordinary skill in the art should appreciate that sub-carriers may also be referred to using terms such as frequency channels, sub-channels, tones, and the like.

Examples of the first and second mobile stations 105(1,2) may include a host of wireless communication devices including, but not limited to, cellular telephones, personal digital assistants (PDAs), and global positioning systems (GPS) that operate in the high-speed wireless packet data network, such as a digital cellular CDMA network. Other examples of the first and second mobile stations 105(1,2) may include smart phones, text messaging devices, and the like.

In the UMTS Long Term Evolution system 100, the high-speed wireless packet data network may deploy any desirable protocol to enable wireless communications between the first and second base stations 105(1, 2) and the first and second mobile stations 105(1,2) according to any desirable protocol. Examples of such a protocol include a (CDMA, cdma2000) protocol, an Evolved Data Optimized (EVDO, 1XEVDO) protocol, a UMTS protocol, a GSM protocol, and like. Other examples of such a protocol include a 1xEV-DO protocol, a UMTS protocol, a GSM protocol, and like. The 3G cellular systems based on any one of these protocols, or the like, provide enhanced voice capacity and support high data rate packet based services. As one example, these features are provided in cdma2000 1xEV high rate packet data air interface referred to as TS-856. More specifically, the 3G cellular system cdma2000 1xEV provides high-speed wireless Internet access to users with asymmetric data traffic relative to a cellular network based on IS-95 standard.

Figure 2 schematically depicts an OFDM transmitter 115a in which a channel allocator 200 may provide adaptive channel allocation based on channel state information 133 associated with one or more uplink channels. In one embodiment, the channel allocator 200 may include bit and/or power allocators 130a(1-2) that may allocate bit and power using the first and second rate requirements 135a(1,2) for the Long Term Evolution (LTE) UMTS system 100 shown in Figure 1. However, in some embodiments, the bit power allocation may be performed separately from the channel allocation. The OFDM transmitter 115a may comprise a plurality of modulators 205(1-N) coupled to the channel allocator 200 for individually modulating a plurality of OFDM frequency channels 120a(1-N). The OFDM transmitter 115a may further comprise an Inverse Fast Fourier Transformer (IFFT) 210 and a guard interval element 215 for insertion of a guard interval in transmission of a high data rate traffic for each mobile station 105 of the plurality of mobile stations 105.

To transmit real-time traffic data of $K$ mobile stations, the OFDM transmitter 115a may, in one embodiment, determine unique frequency channels (such as OFDM carriers) from a plurality of available frequency channels or carriers for allocation to each of the plurality of mobile stations based on an *a priori* data rate per channel for each of the plurality of mobile stations. The *a priori* data rate per channel for each of the plurality of mobile stations may be determined based on channel state information 133 associated with a plurality of frequency channels 120a associated with the plurality of mobile stations and a preliminary assumption of a uniform power distribution among the plurality of frequency channels 120a at the OFDM transmitter 115a. Such channel state information may be user specific and may comprise all considered frequency channels or bundles of such frequency channels for the considered user.

In one exemplary embodiment, a maximum base station transmit power may be assigned to each service class available to the mobile stations. The maximum base station power available for real-time traffic transmission is then assumed, *a priori,* to be uniformly shared between the available frequency channels in each channel allocation step. This is just an a *priori* assumption since the precise power and bit allocation may be performed at a later stage, e.g. by a greedy algorithm, after the channel allocation process. By using the set of channel state information (per user and per channel) together with the preliminary assumption of a uniform power distribution among the channels 120a, an *a priori* data rate per channel may be calculated for each mobile station. For example, *a priori* data rates $R_{NK}$ per channel N for each mobile station K may be calculated using an *a priori* rate allocation matrix given by the equation:

$$\hat{\mathbf{R}} = \begin{pmatrix} R_{11} & \cdots\cdots & R_{1N} \\ \cdot & & \cdot \\ \cdot & & \cdot \\ R_{K1} & \cdots\cdots & R_{KN} \end{pmatrix}$$

for $K$ users and $N$ channels. In one embodiment, the rates $R_{NK}$ are calculated for each mobile station for all available channels and can be stored in a matrix-like rate buffer.

The channel allocation process can then be performed using the rate allocation matrix. In one embodiment, a round robin allocation technique is employed. In round robin allocation, the channel with the highest rate is allocated to a first mobile station. The allocation algorithm then moves to the next mobile station in a round robin fashion and allocates the channel with the next highest rate, and so on. In another embodiment, a differential approach utilizing the difference between the required rate and a sum rate for the channels already assigned by channel allocation may be used. For example: the round robin approach may be used until all mobile stations have a single channel assigned. Then, channels may be allocated to the mobile unit with maximum rate difference between the assigned and required rate. In yet another embodiment, a fairness aware approach may be employed. For example, the fairness aware approach may allocate channels based on a metric that considers the "benefit" of assigning a certain channel to a certain user and the "damage" to the other users by depriving of them of this channel.

The data streams 210(1-K) may then be encoded and, after encoding different data streams 210(1-K), the OFDM transmitter 115a may map the data streams 210(1-K) to the unique OFDM channels 120a(1-N). For this mapping (allocation), the OFDM transmitter 115a may use the first and second rate requirements 135(1,2) indicated by the QoS of different real-time services. An allocator 200 may allocate the $K$ data streams 210(1-K) onto the $N$ OFDM frequency channels 120a(1-N) based on the rate requirements 135(1,2) and the channel state information 160. The allocator 215 includes both the channel allocator 130a(1) and the bit-power allocator 130a(2). After the allocation, the plurality of modulators 205 (1-N) may process (including adaptive OFDM modulation) the different K data streams 210(1-K). Thereafter, the IFFT 210 is performed and a guard interval 215 may be inserted in the signal to be transmitted to each scheduled mobile station 105.

Figure 3 depicts a stylized representation for implementing a method 300 that may allocate the OFDM frequency channels 120a(1N) to the plurality of mobile stations 105 for transmitting real-time traffic data based on channel state information 133. In one embodiment, the method 300 may be implemented in the UMTS Long Term Evolution system 100 shown in Figure 1 consistent with an exemplary embodiment of the present invention. At block 305, the allocator 200 may determine a uniform power distribution associated with the plurality of channels. At block 310, the allocator 200 may determine an *a priori* data transmission rate, *e.g.,* for the mobile station 105(1) to transmit data over a first OFDM frequency channel 120a(1). For example, the allocator 200 may determine the *a priori* data transmission rate associated with one or more of the plurality of frequency channels 120a based on channel state information 133 associated with the frequency channels 120a and a preliminary assumption of a uniform power distribution among the plurality of frequency channels 120a at the OFDM transmitter 115a. At block 310, the allocator 200 may allocate unique frequency channels to the mobile stations based on the *a priori* data transmission rate, as discussed in detail herein.

Embodiments of the techniques for allocating channels described herein may have a number of advantages over conventional practice. For example, splitting the bit, power and channel allocation in two parts permits the bit and power allocation problems to be solved by the less computational intensive greedy algorithm, which is already used in HSDPA. Precalculation of an a-priori rate allocation matrix can facilitate better balance of assigned resources with required resources and each mobile unit may be treated more fairly (e.g., each mobile unit gets what it really needs). The techniques described herein may also result in power saving (because the transmitted power may be reduced) and higher system capacity in terms of number of active users and aggregate data throughput.

Portions of the present invention and corresponding detailed description are presented in terms of software, or algorithms and symbolic representations of operations on data bits within a computer memory. These descriptions and representations arc the ones by which those of ordinary skill in the art effectively convey the substance of their work to others of ordinary skill in the art. An algorithm, as the term is used here, and as it is used generally, is conceived to be a self-consistent sequence of steps leading to a desired result. The steps are those requiring physical manipulations of physical quantities. Usually, though not necessarily, these quantities take the form of optical, electrical, or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

Note also that the software implemented aspects of the invention are typically encoded on some form of program storage medium or implemented over some type of transmission medium. The program storage medium may be magnetic (e.g., a floppy disk or a hard drive) or optical (e.g., a compact disk read only memory, or "CD ROM"), and may be read only or random access. Similarly, the transmission medium may be twisted wire pairs, coaxial cable, optical fiber, or some other suitable transmission medium known to the art. The invention is not limited by these aspects of any given implementation.

The present invention set forth above is described with reference to the attached figures. Various structures, systems and devices are schematically depicted in the drawings for purposes of explanation only and so as to not obscure the present invention with details that are well known to those skilled in the art. Nevertheless, the attached drawings are included to describe and explain illustrative examples of the present invention. The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

While the invention has been illustrated herein as being useful in a wireless telecommunications network environment, it also has application in other connected environments. For example, two or more of the devices described above may be coupled together via device-to-device connections, such as by hard cabling, radio frequency signals (e.g., 802.11 (a), 802.11(b), 802.11(g), 802.16, Bluetooth, or the like), infrared coupling, telephone lines and modems, or the like. The present invention may have application in any environment where two or more users are interconnected and capable of communicating with one another.

Those skilled in the art will appreciate that the various system layers, routines, or modules illustrated in the various embodiments herein may be executable control units. The control units may include a microprocessor, a microcontroller, a digital signal processor, a processor card (including one or more microprocessors or controllers), or other control or computing devices as well as executable instructions contained within one or more storage devices. The storage devices may include one or more machine-readable storage media for storing data and instructions. The storage media may include different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy, removable disks; other magnetic media including tape; and optical media such as compact disks (CDs) or digital video disks (DVDs). Instructions that make up the various software layers, routines, or modules in the various systems may be stored in respective storage devices. The instructions, when executed by a respective control unit, causes the corresponding system to perform programmed acts.

The particular embodiments disclosed above are illustrative only, as the invention may be modified and practiced in different manners apparent to those skilled in the art having the benefit of the teachings herein. Furthermore, no limitations are intended to the details of construction or design herein shown, other than as described in the claims below. It is therefore evident that the particular embodiments disclosed above may be altered or modified and all such variations are considered within the scope of the invention. Accordingly, the protection sought herein is as set forth in the claims below.

**Claims**

1. A method of allocating channels in a multi-user environment for transmitting real-time data traffic in a wireless packet data network, the method comprising:

   determining (310) an a priori data rate per channel for each of a plurality of mobile stations (105) based on channel state information associated with a plurality of frequency channels associated with the plurality of mobile stations and a preliminary assumption of a uniform power distribution among the plurality of frequency channels at a transmitter; and
   allocating (315) a unique frequency channel from said plurality of frequency channels to at least one of the plurality of mobile stations based on said a priori data rate per channel for each of the plurality of mobile stations;
   further comprising: assuming (305) that a given maximum base station power being available for the real-time data traffic transmission is uniformly shared between the available channels of the plurality of frequency channels when allocating each frequency channel.

2. A method, as set forth in claim 1, wherein allocating a unique frequency channel from said plurality of frequency channels further comprises:

   allocating (130a) power and bits after allocating said unique frequency channel.

3. A method, as set forth in claim 2, wherein allocating power and bits after allocating said unique frequency channel further comprises:

   allocating a unique Orthogonal Frequency Division Multiplexing channel to the mobile station for transmitting the real-time traffic transmission from a base station, the unique Orthogonal Frequency Division Multiplexing channel differing from Orthogonal Frequency Division Multiplexing channels associated with other mobile stations in the plurality of mobile stations.

4. A method, as set forth in claim 1, where priori to determining an a priori data rate per channel for each of a plurality of mobile stations further comprising:

   precalculating an a priori rate matrix for allocating Orthogonal Frequency Division Multiplexing channels to the plurality of mobile stations based on the channel state information.

5. A method, as set forth in claim 4, wherein precalculating an a priori rate matrix further comprises:

   obtaining an a-priori rate allocation matrix given

$$\hat{\mathbf{R}} = \begin{pmatrix} R_{11} & \cdots\cdots & R_{1N} \\ \cdot & & \cdot \\ \cdot & & \cdot \\ R_{K1} & \cdots\cdots & R_{KN} \end{pmatrix}$$

   for K users and N channels, the data rates $R_{11}$ to $R_{KN}$ are calculated for each of the plurality of mobile stations for all available channels of said plurality of frequency channels for storing in a matrix-like rate buffer.

6. A method, as set forth in claim 5, further comprising:

   using said a priori rate allocation matrix for allocating frequency channels before allocating power and bit by using a greedy algorithm.

7. A method, as set forth in claim 5, further comprising:

   using said a priori rate allocation matrix for allocating frequency channels based on a Round Robin algorithm by starting with one of the plurality of mobile stations to allocate the frequency channel with a given highest rate and moving on to the next mobile station in the plurality of mobile stations in a round robin fashion.

8. A method, as set forth in claim 5, further comprising:

   using said a priori rate allocation matrix for allocating frequency channels based on a differential algorithm by utilizing the difference between a rate desired and a sum-rate already assigned by allocating the frequency channels.

9. A method, as set forth in claim 5, further comprising:

   using said a priori rate allocation matrix for allocating frequency channels based on a fairness aware algorithm by using a metric based on a "benefit" parameter that indicates the benefit of assigning a first frequency channel to a first mobile station in the plurality of mobile stations and a "damage" parameter indicating damage caused to the other mobile stations by depriving them of this frequency channel.

10. A transmitter (110) for allocating channels a multiuser environment for transmitting real-time data traffic transmission in a wireless communication system (100), said transmitter comprising:

a plurality of encoders (125) to independently encode data streams (210(1-K)) of each individual mobile station in a plurality of mobile stations; a first resource allocator (130(1)) coupled to said plurality of encoders to allocate transmit bits and transmit power to said plurality of mobile stations; and a second resource allocator (130(2)) coupled to said plurality of encoders to:

determine an a priori data rate per channel for each of the plurality of mobile stations based on channel state information associated with a plurality of frequency channels associated with the plurality of mobile stations and a preliminary assumption of a uniform transmit power distribution among the plurality of frequency channels, and allocate a unique frequency channel from said plurality of frequency channels to at least one of the plurality of mobile stations based on said a priori data rate per channel for each of the plurality of mobile stations; and assume that a given maximum base station power being available for the realtime data traffic transmission is uniformly shared between the available channels of the plurality of frequency channels when allocating each frequency channel.

11. A transmitter, as set forth in claim 10, further comprising:

a plurality of modulators (205) coupled to said first and second resource allocators for individually modulating said plurality of frequency channels.

12. A transmitter, as set forth in claim 10, further comprising:

a Fast Fourier transformer (210) for transmission of a high data rate traffic for each of said plurality of mobile station users.

13. A transmitter, as set forth in claim 12, wherein said transmitter is disposed in a base station to allocate a plurality of Orthogonal Frequency Division Multiplexing channels to said plurality of mobile stations.

14. A transmitter, as set forth in claim 12, wherein said transmitter is disposed in a base station router to allocate a plurality of Orthogonal Frequency Division Multiplexing channels to said plurality of mobile stations.

**Patentansprüche**

1. Verfahren zur Zuweisung von Kanälen in einer Mehrbenutzerumgebung zur Übermittlung von Echtzeitdatenverkehr in einem drahtlosen Paketnetzwerk, wobei das Verfahren umfasst:

das Bestimmen (310) einer Apriori-Datenrate pro Kanal für jede aus einer Vielzahl mobiler Stationen (105) auf der Grundlage von Kanalzustandsinformationen, die mit einer Vielzahl von Frequenzkanälen assoziiert sind, die ihrerseits mit der Vielzahl von Mobilstationen und einer vorläufigen Annahme einer gleichmäßigen Leistungsverteilung auf die Vielzahl von Frequenzkanälen an einem Sender assoziiert sind; und das Zuweisen (315) eines individuellen Frequenzkanals aus besagter Vielzahl von Frequenzkanälen zu mindestens einer aus der Vielzahl von Mobilstationen auf der Grundlage besagter Apriori-Datenrate pro Kanal für jede aus der Vielzahl von Mobilstationen; weiterhin umfassend: das Voraussetzen (305), dass eine vorgegebene, für die Übertragung des Echtzeit-Datenverkehrs verfügbare, maximale Basisstation-Leistung gleichmäßig auf die verfügbaren Kanäle aus der Vielzahl von Frequenzkanälen verteilt ist, wenn jeder Frequenzkanal zugewiesen wird.

2. Verfahren nach Anspruch 1, wobei das Zuweisen eines individuellen Frequenzkanals aus besagter Vielzahl von Frequenzkanälen weiterhin umfasst:

das Zuweisen (130a) von Leistung und Bits nach dem Zuweisen des besagten, individuellen Frequenzkanals.

3. Verfahren nach Anspruch 2, wobei das Zuweisen von Leistung und Bits nach dem Zuweisen des besagten, individuellen Frequenzkanals weiterhin umfasst:

das Zuweisen eines orthogonalen Frequenzmultiplexkanals (Orthogonal Frequency Division Multiplexing, OFDM) zu der Mobilstation für das Übermitteln des Echtzeit-Datenverkehrs von einer Basisstation, wobei der orthogonale Frequenzmultiplexkanal ein anderer als andere orthogonale Frequenzmultiplexkanäle ist, die mit anderen Mobilstationen aus der Vielzahl von Mobilstationen assoziiert sind.

4. Verfahren nach Anspruch 1, wobei das Verfahren vor dem Bestimmen einer Apriori-Datenrate pro Kanal für jede aus der Vielzahl von Mobilstationen weiterhin umfasst:

das Vorausberechnen einer Apriori-Ratenmatrix für das Zuweisen von orthogonalen Frequenzmultiplexkanälen zu der Vielzahl von Mobilstationen auf der Grundlage der Kanalzustandsinformationen.

5. Verfahren nach Anspruch 4, wobei das Vorausberechnen einer Apriori-Ratenmatrix weiterhin umfasst:

das Erlangen einer vorgegebenen Apriori-Ratenzuweisungsmatrix

$$\hat{\mathbf{R}} = \begin{pmatrix} R_{11} & \cdots & R_{1N} \\ \vdots & & \vdots \\ R_{K1} & \cdots & R_{KN} \end{pmatrix}$$

für K Benutzer und N Kanäle, wobei die Datenraten $R_{11}$ zu $R_{KN}$ für jede aus der Vielzahl von Mobilstationen für alle verfügbaren Kanäle aus der besagten Vielzahl von Frequenzkanälen berechnet werden, um sie in einem matrixähnlichen Ratenpuffer zu speichern.

6. Ein Verfahren nach Anspruch 5, weiterhin umfassend:

die Benutzung der besagten Apriori-Ratenzuweisungsmatrix für die Zuweisung von Frequenzkanälen vor dem Zuweisen der Leistung und Bits durch die Verwendung eines Greedy-Algorithmus.

7. Ein Verfahren nach Anspruch 5, weiterhin umfassend:

die Benutzung der besagten Apriori-Ratenzuweisungsmatrix für das Zuweisen von Frequenzkanälen auf der Grundlage eines Round-Robin-Algorithmus, indem mit einer aus der Vielzahl von Mobilstationen begonnen wird, um die Frequenzkanäle mit einer gegebenen höchsten Rate zuzuweisen, und

das Fortschreiten zur nächsten Mobilstation aus der Vielzahl von Mobilstationen in Round-Robin-Manier.

8. Ein Verfahren nach Anspruch 5, weiterhin umfassend:

das Benutzen der besagten Apriori-Ratenzuweisungsmatrix für das Zuweisen von Frequenzkanälen auf der Grundlage eines Differentialgorithmus durch die Verwendung der Abweichung zwischen einer erwünschten Rate und einer durch die Zuweisung der Frequenzkanäle bereits zugewiesenen Summenrate.

9. Ein Verfahren nach Anspruch 5, weiterhin umfassend:

das Benutzen der besagten Apriori-Ratenzuweisungsmatrix für das Zuweisen von Frequenzkanälen auf der Grundlage eines Fairness-Aware-Algorithmus durch die Verwendung einer Metrik auf der Grundlage eines Nutzparameters, welcher den Nutzen aus dem Zuweisen eines ersten Frequenzkanals zu einer ersten Mobilstation aus der Vielzahl von Mobilstationen indiziert, und eines Schädigungsparameters, welcher den Schaden indiziert, welcher den anderen Mobilstationen zugefügt wird, indem ihnen dieser Frequenzkanal entzogen wird.

10. Ein Sender (110) für das Zuweisen von Kanälen einer Mehrbenutzerumgebung für das Übermitteln einer Echtzeit-Datenverkehrsübermittlung in einem drahtlosen Kommunikationssystem (100), wobei besagter Sender umfasst:

eine Vielzahl von Kodierern (125) für das unabhängig voneinander erfolgende Kodieren von Datenströmen (210(1-K)) für jede individuelle Mobilstation in einer Vielzahl von Mobilstationen;
einen ersten Ressourcenzuweiser (130(1)), der gekoppelt ist an die besagte Vielzahl von Kodierern für das Zuweisen von Übertragungsbits und Übertragungsleistung zu der besagten Vielzahl von Mobilstationen; und
einen zweiten Ressourcenzuweiser (130(2)), der gekoppelt ist an die besagte Vielzahl von Kodierern und der eingesetzt wird für:

das Bestimmen einer Apriori-Datenrate pro Kanal für jede aus der Vielzahl mobiler Stationen auf der Grundlage von Kanalzustandsinformationen, die mit einer Vielzahl von Frequenzkanälen assoziiert sind, die ihrerseits mit der Vielzahl von Mobilstationen und einer vorläufigen Annahme einer gleichmäßigen Übertragungsleistungsverteilung unter der Vielzahl von Frequenzkanälen assoziiert sind;

und für das Zuweisen eines individuellen Frequenzkanals aus besagter Vielzahl von Frequenzkanälen zu mindestens einer aus der Vielzahl von Mobilstationen auf der Grundlage besagter Apriori-Datenrate pro Kanal für jede aus der Vielzahl von Mobilstationen;

und für das Voraussetzen, dass eine vorgegebene, für die Übertragung des Echtzeit-Datenverkehrs verfügbare, maximale Basisstation-Leistung gleichmäßig auf die verfügbaren Kanäle aus der Vielzahl von Frequenzkanälen verteilt ist, wenn jeder Frequenzkanal zugewiesen wird.

11. Sender nach Anspruch 10, weiterhin umfassend:

eine Vielzahl von Modulatoren (205), die gekoppelt sind an besagten ersten und besagten zweiten Ressourcenzuweiser für das individuelle Modulieren der besagten Vielzahl von Frequenzkanälen.

12. Sender nach Anspruch 10, weiterhin umfassend:

einen Fast-Fourier-Transformer (210) für das Übermitteln eines Datenverkehrs mit hoher Datenrate für jeden aus der besagten Vielzahl von Mobilstationbenutzern.

13. Ein Sender nach Anspruch 12, wobei der besagte Sender so in einer Basisstation angeordnet ist, dass er eine Vielzahl von orthogonalen Frequenzmultiplexkanälen der besagten Vielzahl von Mobilstationen zuweist.

14. Ein Sender nach Anspruch 12, wobei der besagte Sender so in einem Basisstationsrouter angeordnet ist, dass er eine Vielzahl von orthogonalen Frequenzmultiplexkanälen der besagten Vielzahl von Mobilstationen zuweist.

## Revendications

1. Procédé d'allocation de canaux dans un environnement multi-utilisateur destiné à transmettre un trafic de données en temps réel dans un réseau de données sans fil à commutation de paquets, le procédé comprenant les étapes suivantes :

déterminer (310) un débit de données a priori par canal pour chaque station d'une pluralité de stations mobiles (105) en fonction d'informations d'état de canal associées à une pluralité de canaux de fréquence associés à la pluralité de stations mobiles et d'une hypothèse préliminaire de répartition de puissance uniforme sur la pluralité de canaux de fréquence au niveau d'un émetteur ; et

allouer (315) un canal de fréquence unique parmi ladite pluralité de canaux de fréquence à au moins une station de la pluralité de stations mobiles en fonction dudit débit de données a priori par canal pour chaque station de la pluralité de stations mobiles ;

comprenant en outre l'étape suivante : supposer (305) qu'une puissance de station de base maximum donnée disponible pour la transmission du trafic de données en temps réel est uniformément répartie sur les canaux disponibles de la pluralité de canaux de fréquence lors de l'allocation de chaque canal de fréquence.

2. Procédé selon la revendication 1, dans lequel l'allocation d'un canal de fréquence unique parmi ladite pluralité de canaux de fréquence comprend en outre l'étape suivante :

allouer (130a) la puissance et les bits après avoir alloué ledit canal de fréquence unique.

3. Procédé selon la revendication 2, dans lequel l'allocation de la puissance et des bits après l'allocation dudit canal de fréquence unique comprend en outre l'étape suivante :

allouer un canal unique de multiplexage par répartition orthogonale de la fréquence à la station mobile pour transmettre le trafic en temps réel à partir d'une station de base, le canal unique de multiplexage par répartition orthogonale de la fréquence étant différent des canaux de multiplexage par répartition orthogonale de la fréquence associés à d'autres stations mobiles de la pluralité de stations mobiles.

4. Procédé selon la revendication 1, comprenant en outre, avant de déterminer un débit de données a priori par canal pour chaque station de la pluralité de stations mobiles, l'étape suivante :

précalculer une matrice de débit de données a priori pour allouer des canaux de multiplexage par répartition orthogonale de la fréquence à la pluralité de stations mobiles en fonction des informations d'état de canal.

5. Procédé selon la revendication 4, dans lequel le précalcul d'une matrice de débit a priori comprend en outre l'étape suivante :

obtenir une matrice d'allocation de débit a priori étant donné que

$$\hat{R} = \begin{pmatrix} R_{I1} & \cdots & R_{IW} \\ \cdot & & \cdot \\ \cdot & & \cdot \\ \cdot & & \cdot \\ R_{K1} & \cdots & R_{KN} \end{pmatrix}$$

pour K utilisateurs et N canaux, les débits de données $R_{11}$ à $R_{KN}$ sont calculés pour chaque station de la pluralité de stations mobiles pour tous les canaux disponibles de ladite pluralité de canaux de fréquence afin d'être stockés dans une mémoire tampon de débit de type matriciel.

6. Procédé, selon la revendication 5, comprenant en outre l'étape suivante :

utiliser ladite matrice d'allocation de débit a priori pour allouer des canaux de fréquence avant d'allouer la puissance et les bits à l'aide d'un algorithme glouton.

7. Procédé selon la revendication 5, comprenant en outre l'étape suivante :

utiliser ladite matrice d'allocation de débit a priori pour allouer des canaux de fréquence sur la base d'un algorithme Round Robin (à tour de rôle) en commençant par une station de la pluralité de stations mobiles pour allouer le canal de fréquence avec un débit donné le plus élevé et passer à la station mobile suivante de la pluralité de stations mobiles en procédant à tour de rôle.

8. Procédé selon la revendication 5, comprenant en outre l'étape suivante :

utiliser ladite matrice d'allocation de débit a priori pour allouer des canaux de fréquence sur la base d'un algorithme différentiel en exploitant la différence entre un débit souhaité et un débit total déjà attribué par l'allocation des canaux de fréquence.

9. Procédé selon la revendication 5, comprenant en outre l'étape suivante :

utiliser ladite matrice d'allocation de débit a priori pour allouer des canaux de fréquence sur la base d'un algorithme prévu pour un traitement équitable en exploitant une métrique basée sur un paramètre « avantage » qui indique l'avantage apporté par l'allocation d'un premier canal de fréquence à une première station mobile de la pluralité de stations mobiles et un paramètre « dommage » indiquant le dommage causé aux autres stations mobiles en les privant de ce canal de fréquence.

10. Émetteur (110) destiné à allouer des canaux dans un environnement multi-utilisateur pour transmettre un trafic de données en temps réel dans un système de communication sans fil (100), ledit émetteur comprenant :

une pluralité de codeurs (125) pour coder indépendamment des trains de données (210(1-K)) de chaque station mobile particulière d'une pluralité de stations mobiles ;
un premier dispositif d'allocation de ressources (130(1)) couplé à ladite pluralité de codeurs pour allouer des bits de transmission et une puissance de transmission à ladite pluralité de stations mobiles ; et
un deuxième dispositif d'allocation de ressources (130(2)) couplé à ladite pluralité de codeurs pour :

déterminer un débit de données a priori par canal pour chaque station de la pluralité de stations mobiles en fonction d'informations d'état de canal associées à une pluralité de canaux de fréquence associés à la pluralité de stations mobiles et d'une hypothèse préliminaire de répartition uniforme de la puissance de transmission sur la pluralité de canaux de fréquence, et
allouer un canal de fréquence unique de ladite pluralité de canaux de fréquence à au moins une station de la pluralité de stations mobiles en fonction dudit débit de données a priori par canal pour chaque station de la pluralité de stations mobiles ; et supposer qu'une puissance de station de base maximum donnée disponible pour la transmission du trafic de données en temps réel est uniformément répartie sur les canaux disponibles de la pluralité de canaux de fréquence lors de l'allocation de chaque canal de fréquence.

11. Émetteur selon la revendication 10, comprenant en outre :

une pluralité de modulateurs (205) couplés auxdits premier et deuxième dispositifs d'allocation de ressources pour moduler individuellement ladite pluralité de canaux de fréquence.

12. Émetteur selon la revendication 10, comprenant en outre :

une transformée rapide de Fourier (210) pour la transmission d'un trafic de données à haut débit pour chaque utilisateur de ladite pluralité d'utilisateurs de stations mobiles.

**13.** Émetteur selon la revendication 12, ledit émetteur étant placé dans une station de base pour allouer une pluralité de canaux de multiplexage par répartition orthogonale de la fréquence à ladite pluralité de stations mobiles.

**14.** Émetteur selon la revendication 12, ledit émetteur étant placé dans un routeur de station de base pour allouer une pluralité de canaux de multiplexage par répartition orthogonale de la fréquence à ladite pluralité de stations mobiles.

EP 2 127 435 B1

Figure 1

**Figure 2**

300

305 DETERMINE UNIFORM POWER DISTRIBUTION FOR PLURALITY OF FREQUENCY CHANNELS

310 DETERMINE A PRIORI DATA RATE FOR AT LEAST ONE OF PLURALITY OF MOBILE STATIONS ON AT LEAST ONE OF A PLURALITY OF FREQUENCY CHANNELS

315 ALLOCATE UNIQUE FREQUENCY CHANNEL(S) TO MOBILE STATION(S)

**Figure 3**

EP 2 127 435 B1

**EP 2 127 435 B1**

**REFERENCES CITED IN THE DESCRIPTION**

**Patent documents cited in the description**

- EP 1531594 A1
- US 20050031047 A1
- EP 1517576 A2